# EUROPÄISCHE PATENTSCHRIFT

(11) **EP 0 855 124 B1**
(45) Veröffentlichungstag und Bekanntmachung des Hinweises auf die Patenterteilung: **08.12.2004**
(21) Anmeldenummer: 96945511.2
(22) Anmeldetag: 10.10.1996
(51) Int. Cl.: H04Q 7/24

(54) **VERFAHREN UND EINRICHTUNG ZUM WEITERLEITEN VON SPRACHUNGEBUNDENEN INFORMATIONEN**
PROCESS AND DEVICE FOR RETRANSMITTING NON SPEECH-BOUND INFORMATION
PROCEDE ET DISPOSITIF DE RETRANSMISSION D'INFORMATIONS NON LIEES A LA PAROLE

(30) Priorität: 11.10.1995 DE 19539406; 11.10.1995 DE 19539404
(43) Veröffentlichungstag der Anmeldung: 29.07.1998
(73) Patentinhaber: Vodafone Holding GmbH, 40213 Düsseldorf (DE)
(72) Erfinder: GRIESS, Rainer, D-40667 Meerbusch (DE)
(74) Vertreter: Meissner, Peter E., Dipl.-Ing.
(86) Internationale Anmeldenummer: PCT/DE1996/001984
(87) Internationale Veröffentlichungsnummer: WO 1997/014254

(56) Entgegenhaltungen:
- EP-A- 0 664 658
- WO-A-93/26131
- WO-A-95/20283
- IEEE JOURNAL ON SELECTED AREAS IN COMMUNICATIONS, Bd. 8, Nr. 1, 1.Januar 1990, Seiten 67-79, XP000133533 LIBA SVOBODOVA ET AL: "HETEROGENEITY AND OSI"
- IEEE JOURNAL ON SELECTED AREAS IN COMMUNICATIONS, Bd. 8, Nr. 1, 1.Januar 1990, Seiten 4-11, XP000133530 SUNSHINE C A: "NETWORK INTERCONNECTION AND GATEWAYS"
- ISS '95. WORLD TELECOMMUNICATIONS CONGRESS. (INTERNATIONAL SWITCHIN SYMPOSIUM), ADVANCED SWITCHING TECHNOLOGIES FOR UNIVERSAL TELECOMMUNICATIONS AT THE BEGINNING OF THE 21ST. CENTURY BERLIN, APR. 23 - 28, 1995, Bd. 2, 23.April 1995, VERBAND DEUTSCHER ELEKTROTECHNIKER (VDE) ET AL, Seiten 102-106, XP000495634 KORINTHIOS J A ET AL: "NUMBERING AND ADDRESSING FOR PERSONAL AND MOBILE COMMUNICATIONS"

## Beschreibung

Die Erfindung betrifft ein Verfahren und eine Einrichtung zum Weiterleiten von sprachungebundenen Informationen zwischen einem Mobilkommunikationsnetz und einem oder mehreren beliebigen anderen Kommunikationsnetzen.

Bekannte Mobilkommunikationsnetze sind beispielsweise gemäß der GSM Spezifikation (Global System for Mobile Communication) aufgebaut. Im Rahmen dieser GSM-Spezifikation ist ein sogenannter Kurzmitteilungsdienst SMS (Short Message Service) vorgesehen, der es gestattet, Textinformationen mit einer maximalen Länge von 160 Zeichen von einem Teilnehmer zu einem anderen Teilnehmer zu versenden, Diese Textinformationen werden in Form eines Datenpaketes übertragen, wobei jedes Datenpaket gemäß GSM-Spezifikation aus einer Kennung, einer Empfängeradresse und einer Nachricht, die die Textinformation enthält, besteht. Diese Datenpakete werden in einem Dienstzentrum, dem sogenannten Short Message Service Center (SMSC), verwaltet. Dazu gehört, daß beispielsweise eine an einen Teilnehmer, der momentan nicht im Mobilkommunikationsnetz angemeldet ist, gerichtete Nachricht solange gespeichert wird, bis der adressierte Teilnehmer sich im Mobilkommunikationsnetz angemeldet und die Nachricht somit zustellbar wird.

WO-A-93/26131 offenbart ein Verfahren und eine Einrichtung zur Verarbeitung von Kurznachrichten in einem zellularen Netz.

Als nachteilig wird dabei jedoch angesehen, daß ein derartiger Kurzmitteilungsdienst auf das jeweilige nach der GSM-Spezifikation aufgebaute Mobilkommunikationsnetz beschränkt ist.

Darüber hinaus besteht der Wunsch, derartige Kurzmitteilungen mit Teilnehmern auszutauschen, die an einem Netz, das nicht der GSM-Spezifikation entspricht, angeschlossen sind, beispielsweise mit einem Personalcomputer. mit dem auf ein elektronisches Postfach zugegriffen werden kann oder der selbst Medium für ein elektronisches Postfach oder einen anderen Dienst ist.

Grundsätzlich sind dazu beispielsweise aus P. R. Gerke "Prinzipien und Ausführungsformen digitaler Vermittlungen" in Nachrichtentechnik-Elektronik, Berlin 35 (1985) 2, Seiten 47/48, Einrichtungen zur Paketvermittlung bekannt. Eine derartige Einrichtung weist eine Mehrzahl logischer Schnittstellen für kommende und gehende Übertragungskanäle auf, wobei jeder kommende Übertragungskanal temporär mit jedem gehenden Übertragungskanal verbindbar ist.

Dabei wird davon ausgegangen, daß jedes Paket seine Zieladresse mitführt. Bei der Vermittlung eines solchen Paketes wird diese Zieladresse ausgewertet und das Paket dem adressierten Teilnehmer zugeleitet.

Eine nach GSM spezifizierte Kurzmitteilung besteht aus einer vorgebbaren Kennung, einer Empfängeradresse, die die Zieladresse darstellt und der Nachricht. Das Problem besteht nun darin, daß die Empfängeradresse die Zieladresse des Teilnehmers in dem jeweiligen Netz, in dem der Teilnehmer angeschlossen ist, darstellt und keine Auskunft darüber gibt, welchem Netz die Kurzmitteilung zuzuleiten ist. Das bedeutet, daß identische Empfängeradressen für verschiedene Kommunikationsnetze parallel nebeneinander existieren, so daß die Empfängeradresse als Zuweisungskriterium ungeeignet ist.

Der Erfindung liegt daher die Aufgabe zugrunde, ein Verfahren und eine Einrichtung zur Durchführung des Verfahrens zum Weiterleiten von sprachungebundenen Informationen anzugeben, das bzw. die es gestattet, Paketdaten zwischen einem Mobilkommunikationsnetz und mindestens einem beliebigen anderen Kommunikationsnetz auszutauschen, wobei die Informationen unabhängig von der Empfängeradresse dem zutreffenden Kommunikationsnetz zuleitbar sind.

Erfindungsgemäß wird diese Aufgabe mit den Mitteln des Patentanspruches 1 gelöst.

Die Erfindung geht dabei von dem Gedanken aus, die aus dem Mobilkommunikationsnetz gehenden sprachungebundenen Informationen jeweils einem logischen Übertragungskanal zuzuordnen, wobei jedem logischen Übertragungskanal auf seiten des Mobilkommunikationsnetzes eine Kennung zugeordnet ist. Diese Kennung ist Bestandteil des Nachrichtenpaketes während der Weiterleitung.

Vorgebbare vom Mobilkommunikationsnetz kommende logische Übertragungskanäle sind fest mit jeweils einem ausgewählten, zu einem anderen Kommunikationsnetz gehenden physischen Übertragungskanal verbunden.

Durch die Zuordnung jeweils einer Kennung zu einem logischen Übertragungskanal auf seiten des Mobilkommunikationsnetzes und der festen Verbindung eines vom Mobilkommunikationsnetz kommenden logischen Übertragungskanals mit einem zu einem anderen Kommunikationsnetz gehenden logischen Übertragungskanals innerhalb eines physischen Übertragungskanals wird unabhängig von der netzspezifischen Empfängeradresse jedes Datenpaket dem zutreffenden Kommunikationsnetz zuleitbar.

Vorteilhafterweise ist darüber hinaus jeder Kennung ein Dienst zuweisbar, wobei die individuelle Verwaltung der teilnehmerspezifischen Inanspruchnahme verschiedener Dienste ermöglicht wird.

Weiterhin ist vorgesehen, daß jedem zu einem anderen Kommunikationsnetz gehenden physischen Übertragungskanal mindestens ein vom Mobilkommunikationsnetz kommender logischer Übertragungskanal zuordenbar ist. Mit anderen Worten ist jedem zu einem anderen Kommunikationsnetz gehenden physischen Übertragungskanal eine Mehrzahl von vom Mobilkommunikationsnetz kommenden logischen Übertragungskanälen zuordenbar. Ein zu einem anderen Kommunikationsnetz gehender physischer Übertragungskanal kann mit einer Mehrzahl logischer Übertragungskanäle ausgestattet sein, die im Zeitvielfach selektierbar sind.

Systematisch liegt das Wesen der Erfindung darin, daß GSM-spezifische Raum-/Zeitvielfach über ein informationsartselektives Raumvielfach in eine Mehrzahl räumlich getrennter kommunikationsnetzspezifischer Zeitvielfache umzusetzen.

Vorteilhafterweise ist damit eine Mehrzahl von differenzierten Kurzmitteilungsarten, die sich in verschiedenen Diensten darstellen, über ein einziges anderes Kommunikationsnetz weiterleitbar und trotzdem differenziert verwaltbar.

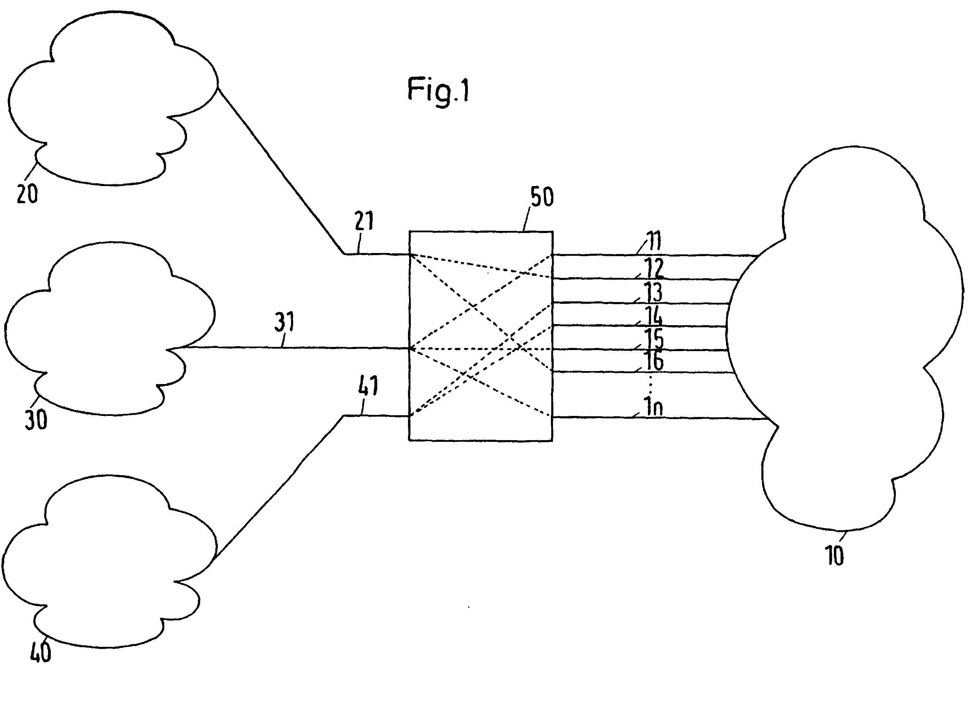

Die Erfindung wird nachstehend anhand eines Ausführungsbeispiels näher erläutert. Dazu ist in Figur 1 eine Einrichtung 50 zum Weiterleiten von sprachungebundenen Informationen zwischen einem Mobilkommunikationsnetz 10 und anderen Kommunikationsnetzen 20, 30 und 40 prinzipiell dargestellt. Vom Mobilkommunikationsnetz 10 kommend sind n logische Übertragungskanäle 11 bis 1n vorgesehen. Die anderen Kommunikationsnetze 20, 30 und 40 sind jeweils über einen physischen Übertragungskanal 21, 31 und 41 der jeweils mit einer Mehrzahl logischer Übertragungskanäle ausgestattet sein kann, an die Einrichtung 50 angeschlossen.

Beispielsweise sei das Kommunikationsnetz 20 das Datex-P-Netz, das Kommunikationsnetz 30 das dienstintegrierte Digitalnetz ISDN und das Kommunikationsnetz 40 das Internet.

Jedem der vom Mobilkommunikationsnetz 10 kommenden logischen Übertragungskanäle 11 bis 1n ist ein Dienst zugeordnet, zu dessen Betrieb ein Dienstzentrum vorgesehen ist, das in einem anderen Kommunikationsnetz 20, 30 und 40 angeschlossen ist.

Derartige Dienste können beispielsweise auf Anfrage antwortende Auskunftssysteme, Ansagedienste, Notrufsysteme umfassen oder undirektional ein Rufsignal gegebenenfalls mit Nachrichtenbindung an einen mobilen Rufsignalempfänger verschicken und als sogenannter City-Ruf ausgestaltet sein.

Derartige Dienste können von einem Teilnehmer des Mobilkommunikationsnetzes 10 nachgesucht werden, so daß der Aufbau der Verbindung zum Zwecke des Datenaustausches vom Mobilkommunikationsnetz 10 kommend initiiert wird. Es ist aber grundsätzlich auch möglich, derartige Dienste aus einem anderen Kommunikationsnetz 20, 30 oder 40 nachzusuchen. Soweit die Verbindung virtuell geschaltet ist, ist ein bidirektionaler Datenaustausch möglich. Für andere Dienste, die aus einem anderen Kommunikationsnetz 20, 30 oder 40 kommen und bei denen der Verbindungsaufbau aus dem jeweiligen Kommunikationsnetz 20, 30 oder 40 initiiert wird, ist die Zieladresse gleich der Empfängeradresse des Teilnehmers im gerufenen Mobilkommunikationsnetz 10, also beispielsweise die Rufnummer des gerufenen Teilnehmers.

Die logischen Übertragungskanäle 11 bis 1 n, die vom Mobilkommunikationsnetz 10 kommen, sind jeweils einem der zu einem anderen Kommunikationsnetz 20, 30 und 40 gehenden physischen Übertragungskanäle 21, 31 und 41 zugeordnet. Dabei kann jedem gehenden physischen Übertragungskanal 21, 31 und 41 eine Mehrzahl kommender logischer Übertragungskanäle 11 bis 1 n zugeordnet sein. Beispielsweise sind in Figur 1 dem zum Datex-P-Netz 20 gehenden physischen Übertragungskanal 21 die kommenden logischen Übertragungskanäle 12 und 16 zugeordnet, über die Dienste dargestellt werden, deren Dienstzentrum Teilnehmer des Datex-P-Netzes 20 ist. Weiterhin sind dem zum ISDN-Netz 30 gehenden physischen Übertragungskanal 31 die kommenden logischen Übertragungskanäle 11, 15 und 1 n fest zugeordnet, über die Dienste dargestellt werden, deren Dienstzentrum Teilnehmer des ISDN-Netzes 30 ist. Letztlich sind die kommenden logischen Übertragungskanäle 13 und 14 über die Einrichtung 50 zum Weiterleiten sprachungebundener Informationen fest mit dem physischen Übertragungskanal 41, der die Verbindung zum Internet 40 darstellt, verbunden.

Dabei können in jedem der Kommunikationsnetze 20, 30 und 40 eine Mehrzahl von Dienstzentren vorgesehen sein, die jeweils über ihre Empfängeradresse, die Bestandteil des Datenpaketes ist, selektierbar sind.

Vorteilhafterweise ist auch bei wechselnder Zuordnung der Dienstzentren zu den Kommunikationsnetzen 20, 30 und 40 die Nutzung der Dienste durch Teilnehmer im Mobilkommunikationsnetz 10 völlig transparent, da die Kennung für den Dienst erhalten bleibt und lediglich der betreffende, vom Mobilkommunikationsnetz 10 kommende logische Übertragungskanal 1 n dem zutreffenden gehenden physischen Übertragungskanal 21, 31 oder 41 in das aktuell zutreffende andere Kommunikationsnetz 20, 30 oder 40 in der Einrichtung 50 zum Weiterleiten sprachungebundener Informationen zuzuordnen ist.

### Bezugszeichenliste

- 10: Mobilkommunikationsnetz
- 20, 30, 40: Kommunikationsnetze
- 50: Einrichtung zum Weiterleiten
- 11 bis 1n: logische Übertragungskanäle vom Mobilkommunikationsnetz
- 21, 31, 41: physische Übertragungskanäle zu anderen Kommunikationsnetzen

## Patentansprüche

1. Verfahren zum Weiterleiten von sprachungebundenen Informationen zwischen einem Mobilkommunikationsnetz und einem beliebigen anderen Kommunikationsnetz in Form von Datenpaketen, wobei jedes Datenpaket aus einer Kennung, einer Empfängeradresse und einer Nachricht besteht,
**dadurch gekennzeichnet,**
**daß** in Abhängigkeit von der Kennung der Übertragungsweg für die Weiterleitung der Informationen eingestellt wird, indem jeder Kennung ein logischer Übertragungskanal zugeordnet wird und jeder logische Übertragungskanal in genau einen physischen Übertragungskanal eingebunden wird.

2. Einrichtung zur Durchführung eines Verfahrens zum Weiterleiten von sprachungebundenen Informationen zwischen einem Mobilkommunikationsnetz und einem oder mehreren beliebigen anderen Kommunikationsnetzen, die auf Seiten des Mobilkommunikationsnetzes logische Schnittstellen für eine Mehrzahl kommender und gehender Übertragungskanäle und für jedes andere Kommunikationsnetz mindestens eine logische Schnittstelle für kommende und gehende Übertragungskanäle aufweist, wobei jeder von dem Mobilkommunikationsnetz kommende Übertragungskanal mit jedem zum Mobilkommunikationsnetz gehenden temporär logisch verbindbar ist und jeder vom Mobilkommunikationsnetz kommende logische Übertragungskanal mit jedem in ein anderes Kommunikationsnetz gehenden logischen Übertragungskanal und jeder von einem anderen Kommunikationsnetz kommende logische Übertragungskanal mit jedem in das Mobilkommunikationsnetz gehenden logischen Übertragungskanal verbindbar ist,
**dadurch gekennzeichnet, daß** die Einrichtung derart gestaltet ist,
daß jedem kommenden logischen Übertragungskanal (11 bis 1 n) auf seiten des Mobilkommunikationsnetzes (10) eine Kennung zugeordnet ist und
daß vorgebbare vom Mobilkommunikationsnetz (10) kommende logische Übertragungskanäle (11 bis 1 n) fest mit jeweils einem ausgewählten zu einem anderen Kommunikationsnetz (20, 30, 40) gehenden physischen Übertragungskanal (21, 31, 41) verbunden sind, wobei jedem zu einem anderen Kommunikationsnetz (20, 30, 40) gehenden physischen Übertragungskanal (21, 31, 41) mindestens ein vom Mobilkommunikationsnetz (10) kommender logischer Übertragungskanal (11 bis 1 n) zuordenbar ist.

## Claims

1. Method of retransmitting non-speechbound information between a mobile communications network and any other communications network in the form of data packets, each data packet being made up of an identification key, a receive address and a message,
**characterised in that**
the transmission path for retransmitting the information is set in dependence on the identification key **in that** a logical transmission channel is assigned to each identification key, and each logical transmission channel is integrated into precisely one physical transmission channel.

2. Equipment for implementing a method of retransmitting non-speechbound information between a mobile communications network and any one or more other communications networks, having, on the part of the mobile communications network, logical interfaces for a number of incoming and outgoing transmission channels, and for each other communications network at least one logical interface for incoming and outgoing transmission channels, whereby each transmission channel coming from the mobile communications network can be temporarily logically linked to each one going to the mobile communications network, and each logical transmission channel coming from the mobile communications network can be linked to each logical transmission channel going into a different communications network, and each logical transmission channel coming from a different communications network can be linked to each logical transmission channel going into the mobile communications network, **characterised by** the fact that the equipment is made in such a way that
an identification key is assigned to each incoming logical transmission channel (11 to 1 n) on the part of the mobile communications network (10) and
predeterminable logical transmission channels (11 to 1 n) coming from the mobile communications network (10) are permanently linked in each case to one selected physical transmission channel (21, 31, 41) going to a different communications network (20, 30, 40), at least one logical transmission channel (11 to 1 n) coming from the mobile communications network (10) being assignable to each physical transmission channel (21, 31, 41) going to a different communications network (20, 30, 40).

## Revendications

1. Procédé de retransmission d'informations non vocales entre un réseau de communication mobile et un autre réseau de communication quelconque sous la forme de paquets de données, chaque paquet de données étant constitué d'un identificateur, d'une adresse de destinataire et d'un message,
**caractérisé en ce qu'**on règle la voie de transmission pour la retransmission des informations en fonction de l'identificateur en associant à chaque identificateur un canal de transmission logique et en intégrant chaque canal de transmission logique dans exactement un canal de transmission physique.

2. Dispositif pour la mise en oeuvre d'un procédé de retransmission d'informations non vocales entre un réseau de communication mobile et un ou plusieurs autres réseaux de communication quelconques, lequel comporte du côté du réseau de communication mobile des interfaces logiques pour plusieurs canaux de transmission entrants et sortants et du côté de chaque autre réseau de communication au moins une interface logique pour des canaux de transmission entrants et sortants, dans lequel chaque canal de transmission arrivant du réseau de communication mobile peut présenter une liaison logique temporaire avec chaque canal de transmission partant vers le réseau de communication mobile et chaque canal de transmission logique arrivant du réseau de communication mobile peut être relié à chaque canal de transmission logique partant vers un autre réseau de communication et chaque canal de transmission logique arrivant d'un autre réseau de communication peut être relié à chaque canal de transmission logique partant vers le réseau de communication mobile,
**caractérisé en ce que** le dispositif est conçu de telle sorte que
un identificateur est associé à chaque canal de transmission logique entrant (11 à 1 n) du côté du réseau de communication mobile (10), et
des canaux de transmission logiques (11 à 1 n) pouvant être prescrits et arrivant du réseau de communication mobile (10) sont reliés en permanence à chaque fois à un canal de transmission physique (21, 31, 41) partant vers un autre réseau de communication (20, 30, 40) et sélectionné, au moins un canal de transmission logique (11 à 1 n) arrivant du réseau de communication mobile (10) pouvant alors être associé à chaque canal de transmission physique (21, 31, 41) partant vers un autre réseau de communication (20, 30, 40).
